# EUROPÄISCHE PATENTSCHRIFT

(11) **EP 4 031 818 B1**
(45) Veröffentlichungstag und Bekanntmachung des Hinweises auf die Patenterteilung: **31.12.2025**
(21) Anmeldenummer: 20772017.8
(22) Anmeldetag: 10.09.2020
(51) Int. Cl.: F25B 41/00

(54) **EXPANSIONSVENTIL MIT EINEM DICHTRINGHALTER ZUR VEREINFACHTEN MONTAGE**
EXPANSION VALVE HAVING A SEALING RING HOLDER FOR SIMPLIFIED ASSEMBLY
DÉTENDEUR DOTÉ D'UN SUPPORT DE BAGUE D'ÉTANCHÉITÉ POUR MONTAGE SIMPLIFIÉ

(30) Priorität: 20.09.2019 DE 102019214335; 09.09.2020 DE 102020211278
(43) Veröffentlichungstag der Anmeldung: 27.07.2022
(73) Patentinhaber: Robert Bosch GmbH, 70442 Stuttgart (DE)
(72) Erfinder: KUENZEL, Gerald, 77839 Lichtenau (DE)
(86) Internationale Anmeldenummer: PCT/EP2020/075277
(87) Internationale Veröffentlichungsnummer: WO 2021/052849

(56) Entgegenhaltungen:
- WO-A2-03/091816
- US-A- 1 378 026
- US-A- 3 454 035

## Beschreibung

Die Erfindung betrifft ein Ventil, insbesondere ein Expansionsventil, zum Steuern eines Fluidstroms, aufweisend ein Ventilgehäuse und ein Ventilmittel. Des Weiteren betrifft die Erfindung einen Dichtringhalter für ein derartiges Ventil.

### Stand der Technik

In unterschiedlichen technischen Bereichen werden Ventile eingesetzt.

Beispielsweise werden bei Klimaanlagen Expansionsventile verwendet, welche ein Kühlmittel expandieren und somit eine Abkühlung erzeugen können. Analog hierzu sind Ventile zum Komprimieren des Kältemittels notwendig.

Insbesondere im automobilen Bereich sind für den Aufbau der Klimaanlage mehrere unterschiedliche Ventile nötig. Bei elektrisch angetriebenen Fahrzeugen kann das Kühlmittel der Klimaanlage zum Abkühlen von weiteren Komponenten, wie beispielsweise der Leistungselektronik, der Traktionsbatterie und der Elektromotoren, eingesetzt werden.

Bei zunehmender Anzahl an zu kühlenden Komponenten steigt die Anzahl der notwendigen Ventile, um eine möglichst energieeffiziente und zielgerichtete Verwendung des Kühlmittels zu ermöglichen. Hierdurch sind viele unterschiedliche Ventile, wie beispielsweise Verdichtungsventile und Expansionsventile, notwendig, wodurch die Bauteilvielfalt und damit auch die Herstellungskosten eines derartigen Kühlsystems steigen.

Die WO 03/091816 A2 offenbart ein Regulierventil für das Steuern eines Fluidstroms, aufweisend ein Ventilgehäuse mit einem Aufnahmeraum und mindestens zwei mit dem Aufnahmeraum verbundenen Fluidkanälen, aufweisend eine Öffnung, welche vorzugsweise senkrecht zu den Fluidkanälen verläuft, und in den Aufnahmeraum mündet, wobei in dem Aufnahmeraum ein Dichtringhalter mit einem Ventilmittel angeordnet ist, wobei der Dichtringhalter mit aufgenommenen Ventilmittel durch die Öffnung in den Aufnahmeraum hineinsetzbar ist und wobei das Ventilmittel durch mindestens zwei Dichtringe in dem Dichtringhalter drehbar positioniert ist. Die US 1,378,026 A offenbart ein druckreduzierendes Ventil. Die US 3,454,035 A offenbart ein Ventil.

### Offenbarung der Erfindung

Die der Erfindung zugrunde liegende Aufgabe kann darin gesehen werden, ein preiswert herstellbares und universell einsetzbares Ventil vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Ventil, insbesondere ein Expansionsventil, zum Steuern eines Fluidstroms bereitgestellt. Das Ventil weist ein Ventilgehäuse, mit einem Aufnahmeraum und mindestens zwei mit dem Aufnahmeraum verbundenen Fluidkanälen auf. Des Weiteren weist das Ventilgehäuse eine Öffnung auf, welche vorzugsweise senkrecht zu den Fluidkanälen verläuft und in dem Aufnahmeraum mündet. Alternativ kann die Öffnung auch quer oder parallel oder leicht schief zu mindestens einem Fluidkanal, insbesondere zu den Fluidkanälen, verlaufen.

Erfindungsgemäß ist in dem Aufnahmeraum ein Dichtringhalter mit einem Ventilmittel angeordnet, wobei der Dichtringhalter mit aufgenommenen Ventilmittel durch die Öffnung in den Aufnahmeraum hineinsetzbar ist. Das Ventilmittel ist vorzugsweise durch mindestens zwei Dichtringe in dem Dichtringhalter drehbar positioniert.

Die Dichtringe dienen als eine Fluiddichtung des Ventilmittels und ermöglichen gleichzeitig ein Gleiten oder Drehen des Ventilmittels entlang der Dichtringe. Hierzu können die Dichtringe aus einem Elastomer, Teflon, Graphit oder einem Kunststoff mit einer Dichtwirkung bestehen. Vorzugsweise kann in einem im Aufnahmeraum hineingesetzten Zustand ein Druck auf das Ventilmittel über die Dichtringe ausgeübt werden, um eine Dichtwirkung zu erhöhen.

Erfindungsgemäß weist der Dichtringhalter mindestens zwei Durchgangsöffnungen zum Verbinden mit den Fluidkanälen auf, wobei in den Durchgangsöffnungen jeweils ein Dichtring und ein O-Ring einsetzbar sind.

Das Ventilmittel kann vorzugsweise kugelförmig ausgestaltet sein, wobei das Ventilmittel zumindest bereichsweise eine Kugelform aufweist. Die Wirkungsweise des Ventils kann somit einem Kugelhahn ähneln.

Das Ventil kann beispielsweise als ein Expansionsventil ausgestaltet sein. Insbesondere kann das Ventil zum Führen, Absperren oder Expandieren eines als Kältemittel ausgestalteten Fluids dienen. Das Fluid kann beispielsweise als ein Ammoniak, ein Kohlenstoffdioxid, eine wässrige Lösung, eine Kohlenwasserstoffverbindung, wie R-134a, R1234yf, Propan, Butan und dergleichen ausgestaltet sein. Vorzugsweise kann das Ventil sowohl als ein Expansionsventil als auch als ein Verdichtungsventil eingesetzt werden.

Es sind eine Montage des Ventils und die Verbindung des Ventilmittels mit einer Welle über eine gemeinsame Öffnung möglich. Hierdurch wird eine zusätzliche Montageöffnung zum Montieren des Ventilmittels im Ventilgehäuse nicht benötigt, wodurch das Ventilgehäuse mechanisch robuster ausgebildet und die Herstellung beschleunigt werden kann. Des Weiteren wird die Herstellung des Ventils technisch vereinfacht, wodurch das Ventil kosteneffizienter ausgestaltet sein kann. Insbesondere kann durch eine derartige Montage des Ventilmittels ein komplexer Fügeprozess zum korrekt ausgerichteten Einbringen des Ventilmittels in den Aufnahmeraum des Ventilgehäuses eingespart werden. Hierbei entfallen auch zusätzliche Befestigungsschritte zum Einbringen von Schrauben, welche lediglich das Ventilmittel im Gehäuse platzieren.

Bevorzugterweise sind die Dichtringe in Durchgangsöffnungen des Dichtringhalters eingesetzt, welche den Fluidkanälen zugewandt sind. Insbesondere können die Dichtringe zusätzliche O-Ringe aufnehmen und derart positionieren, dass die O-Ringe zwischen dem Dichtringhalter und Wandungen des Aufnahmeraums arretiert sind. Durch diese Anordnung wird das Ventilmittel über die Dichtringe gegenüber einem Fluid abgedichtet. Die O-Ringe wirken axial bzw. in Flussrichtung des Fluids durch die Fluidkanäle dichtend und können somit die Dichtringe gegenüber den Wandungen des Aufnahmeraums abdichten. Durch diese Anordnung kann ein Herausspringen der O-Ringe auch bei hohen Druckunterschieden vermieden werden.

Das Ventil kann technisch besonders einfach hergestellt bzw. zusammengebaut werden. Hierzu wird das Ventilmittel in den Dichtringhalter hineingesetzt. Anschließend werden seitliche Durchgangsöffnungen des Dichtringhalters mit Dichtringen und O-Ringen bestückt. Vorzugsweise kann der Dichtringhalter die Dichtringe und die O-Ringe derart arretieren, dass diese sich nicht unbeabsichtigt lösen können. Anschließend kann der Dichtringhalter mit dem Ventilmittel, den Dichtringen und den O-Ringen durch die Öffnung in den Aufnahmeraum des Ventilgehäuses hineingesetzt werden.

In einem abschließenden Schritt kann eine Wellenführung als Deckel die Öffnung verschließen und das Ventilmittel mit einer Welle verbinden. Die Welle kann zum Bewegen, insbesondere zum Drehen, des Ventilmittels dienen, um die Fluidkanäle miteinander fluidleitend zu verbinden oder voneinander zu entkoppeln.

Die Welle kann manuell oder durch einen Elektromotor bzw. einen Aktuator gedreht werden. Beispielsweise kann ein Aktuator mit einem Getriebe zum präzisen Einstellen eines Drehwinkels des Ventilmittels verwendet werden. Mit Hilfe eines Aktuators kann eine automatisierte Ventilsteuerung und Ventilregelung realisiert werden.

Gemäß einem Ausführungsbeispiel ist jeweils ein O-Ring an den mindestens zwei Dichtringen angeordnet und ist durch den Dichtringhalter in Position gehalten. Insbesondere kann ein Dichtring einen O-Ring radial innenseitig und axial begrenzen. In einem in einer Durchgangsöffnung des Dichtringhalters eingesetzten Zustand kann hierdurch zwischen einer Wandung der Durchgangsöffnung und dem Dichtring eine ringförmige Aufnahmenut zum Aufnehmen eines O-Rings ausgebildet werden. Durch den Einsatz eines O-Rings kann der jeweilige Dichtring gegenüber dem Ventilgehäuse abgedichtet werden. Insbesondere kann jeder O-Ring durch eine derartige Anordnung axial wirkend gegen Fluide abdichten.

Vorzugsweise kann der O-Ring aus einem elastischen Material, wie beispielsweise einem Elastomer, einem Silikon oder einem Kautschuk bestehen. Durch die elastischen Materialeigenschaften des O-Rings kann der O-Ring eine Federkraft über den Dichtring auf das Ventilmittel ausüben und somit eine Dichtwirkung des Dichtrings auf das Ventilmittel verbessern. Dies kann insbesondere durch das Positionieren des Dichtringhalters im Aufnahmeraum des Ventilgehäuses realisiert werden.

Durch zwei auf gegenüberliegenden Seiten des Ventilmittels angeordnete Dichtringe und O-Ringe kann eine besonders optimale Dichtwirkung zwischen den Dichtringen und dem Ventilmittel erreicht werden.

Nach einer weiteren Ausführungsform ist der Dichtringhalter einteilig oder zweiteilig ausgestaltet. Bei einem zweiteiligen Dichtringhalter kann das Ventilmittel besonders einfach im Dichtringhalter angeordnet werden. Bei einem einteiligen Dichtringhalter kann das Ventilmittel beispielsweise über eine Öffnung in einen innenliegenden Aufnahmebereich eingesetzt werden. Hierbei kann unterstützend der Dichtringhalter durch Erhitzen thermisch vergrößert und das Ventilmittel durch Abkühlen verkleinert werden.

Alternativ kann der Dichtringhalter bereichsweise elastisch ausgestaltet sein, wodurch das Ventilmittel mit einem geringen Kraftaufwand in einen innenliegenden Aufnahmebereich des Dichtringhalters hineinsetzbar ist.

Gemäß einem weiteren Ausführungsbeispiel sind Teile des zweiteilig ausgeführten Dichtringhalters durch eine Steckverbindung, eine Klebeverbindung, eine Schweißverbindung, oder durch eine formschlüssige Wechselwirkung der Teile mit Wandungen des Aufnahmeraums zum Positionieren des Ventilmittels verbunden. Insbesondere können hierdurch die Teile des Dichtringhalters nach einem Einbringen des Ventilmittels in den innenliegenden Aufnahmebereich miteinander verbunden werden, wodurch das Ventilmittel ortsfest im Dichtringhalter verbleiben kann.

In einer technisch besonders einfachen Ausgestaltung kann der Aufnahmeraum im Ventilgehäuse eine dem Dichtringhalter korrespondierende Form aufweisen. Hierdurch können die beiden Teile des Dichtringhalters mit dem positionierten Ventilmittel derart im Aufnahmeraum angeordnet werden, dass ein zusammenhängender Dichtringhalter ausgebildet wird. Insbesondere kann der Dichtringhalter durch Wandungen des Aufnahmeraums in einem zusammengesetzten Zustand verbleiben.

Nach einer weiteren Ausführungsform weist der Dichtringhalter eine Quaderform auf und ist als ein Aufnahmekäfig für das Ventilmittel ausgestaltet. Vorzugsweise ist der Aufnahmeraum des Ventilgehäuses ebenfalls quaderförmig ausgeführt. Hierdurch kann der Dichtringhalter formschlüssig in den Aufnahmeraum hineingesetzt werden, wobei durch die Quaderform eine Sicherung gegen ein nachträgliches Verdrehen oder eine fehlerhafte Montage des Ventils gewährleistet wird.

Gemäß einem weiteren Ausführungsbeispiel besteht der Dichtringhalter aus einem Kunststoff oder einem Metall und ist vorzugsweise durch ein Spritzgussverfahren, ein 3D-Druckverfahren oder ein Gussverfahren herstellbar. Das Ventilgehäuse kann hierbei aus einem Kunststoff oder einem Metall, wie beispielsweise Aluminium oder einer Aluminiumlegierung, bestehen. Hierdurch kann der Dichtringhalter flexibel durch eine Vielzahl von Herstellungsverfahren hergestellt werden. Ein durch Spritzgussverfahren hergestellter Dichtringhalter kann beispielsweise technisch besonders einfach und kosteneffizient hergestellt werden.

Nach einer weiteren Ausführungsform sind die Durchgangsöffnungen vorzugsweise derart ausgebildet, dass diese in Richtung der Fluidkanäle zeigen, welche im Aufnahmeraum des Ventilgehäuses münden. Insbesondere können die Fluidkanäle in den Durchgangsöffnungen münden. Die O-Ringe können hierbei die Dichtringe und auch die Fluidkanäle gegenüber dem Aufnahmeraum des Ventilgehäuses abdichten.

Gemäß einem weiteren Ausführungsbeispiel sind der Dichtring und der O-Ring formschlüssig, reibschlüssig oder kraftschlüssig in die Durchgangsöffnungen des Dichtringhalters einsetzbar. Durch diese Maßnahme kann der Dichtringhalter mit dem eingesetzten Ventilmittel, den Dichtringen und den O-Ringen als eine zusammenhängende Komponente zusammengesetzt werden, wobei diese zusammenhängende Komponente in einem Herstellungsschritt durch die Öffnung in den Aufnahmeraum des Ventilgehäuses hineinschiebbar ist. Durch diesen Herstellungsschritt werden gleichzeitig sämtliche Dichtwirkungen zwischen den Wandungen des Aufnahmeraums und den O-Ringen sowie zwischen den Dichtringen und dem Ventilmittel ausgebildet. Durch ein anschließendes Verschließen der Öffnung kann das Ventil fertiggestellt werden.

Nach einer weiteren Ausführungsform ist über die Öffnung des Ventilgehäuses das Ventilmittel verdrehsicher über eine Wellenaufnahme mit einer Welle verbindbar. Hierfür kann die Wellenaufnahme eine Form oder eine Ausnehmung bzw. Ausbeulung aufweisen, welche mit einem endseitigen Wellenabschnitt formschlüssig verbindbar ist. Durch eine derartige Verbindung kann die Welle das Ventilmittel zuverlässig drehen und somit einen Fluidstrom zwischen den Fluidkanälen steuern und regeln. Die Welle kann vorzugsweise durch einen Elektromotor oder einen Aktuator zum Einstellen einer Drehposition des Ventilmittels angetrieben werden.

Gemäß einem weiteren Ausführungsbeispiel weist das Ventilmittel an einer der Wellenaufnahme entgegengesetzten Seite eine Abflachung auf. Vorzugsweise kann die Abflachung des Ventilmittels zu einem Boden des Aufnahmeraums gerichtet sein. Der Boden des Aufnahmeraums liegt an einer der Öffnung gegenüberliegenden Seite des Aufnahmeraums und ist im Wesentlichen eben geformt. Hierdurch kann das Ventilmittel auf dem Boden aufliegen, wodurch ein unbeabsichtigtes Kippen oder Verdrehen des Ventilmittels im Aufnahmeraum verhindert wird. Durch diese Maßnahme kann eine korrekte Ausrichtung der Wellenaufnahme zu der Öffnung des Ventilgehäuses gewährleistet werden.

Nach einem weiteren Aspekt der Erfindung wird ein Dichtringhalter zum Aufnehmen eines Ventilmittels bereitgestellt. Der Dichtringhalter ist für den Einsatz in einem erfindungsgemäßen Ventil eingerichtet.

Vorzugsweise ist der Dichtringhalter kastenförmig bzw. gitterförmig ausgestaltet, wodurch ein innenseitiger Aufnahmebereich ausgebildet wird, in welchen das Ventilmittel hineinpressbar oder hineinsetzbar ist. Der Dichtringhalter kann vorzugsweise Dichtringe und O-Ringe relativ zum Ventilmittel aufnehmen und positionieren, wodurch der Dichtringhalter als eine universelle Aufnahmeeinheit und Positionierungseinheit ausgebildet ist. Durch den Einsatz eines derartigen Dichtringhalters kann die Herstellung eines Ventils besonders schnell und kosteneffizient ausgeführt werden.

Im Folgenden werden anhand von stark vereinfachten schematischen Darstellungen bevorzugte Ausführungsbeispiele der Erfindung näher erläutert.

### Hierbei zeigen

- Fig. 1: eine Schnittdarstellung durch ein Ventil gemäß einer Ausführungsform,
- Fig. 2: eine Schnittdarstellung durch ein Ventilgehäuse aus Fig. 1,
- Fig. 3: eine perspektivische Darstellung auf eine Öffnung des Ventils aus Fig. 1 und
- Fig. 4: eine perspektivische Darstellung eines Dichtringhalters gemäß einer Ausführungsform.

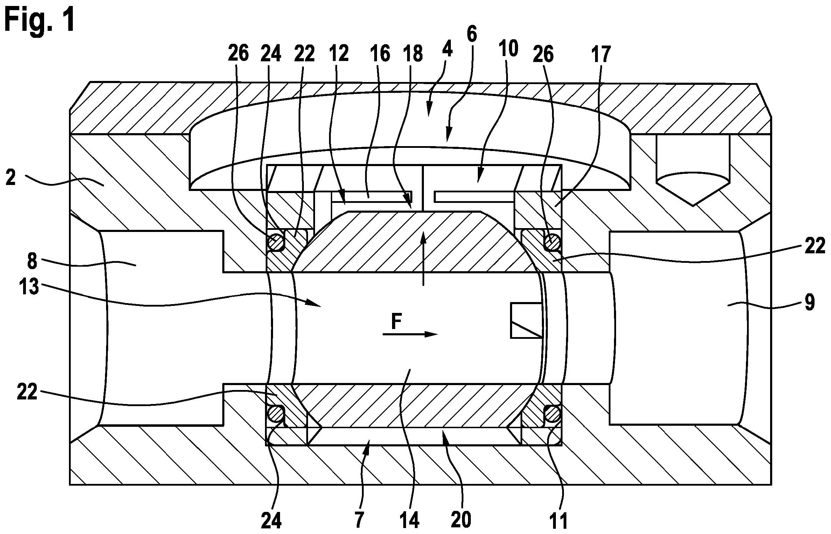

In der Figur 1 ist eine Schnittdarstellung durch ein Ventil 1 gemäß einer Ausführungsform gezeigt. Das Ventil 1 ist als ein Expansionsventil ausgestaltet und weist ein Ventilgehäuse 2 auf, welches aus einer Aluminiumlegierung besteht.

In das Ventilgehäuse 2 ist eine Öffnung 4 eingebracht, welche in einem im Wesentlichen quaderförmigen Aufnahmeraum 6 mündet. In dem Ventilgehäuse 2 sind darüber hinaus zwei Fluidkanäle 8, 9 ausgebildet. Die Fluidkanäle 8, 9 sind zylindrisch geformt und münden in dem Aufnahmeraum 6. Die Fluidkanäle 8, 9 erstrecken sich beispielhaft senkrecht zu der Öffnung 4. Die Fluidkanäle 8, 9 sind derart angeordnet, dass eine Fluidströmung F von einem ersten Fluidkanal 8 über den Aufnahmeraum 6 in einen zweiten Fluidkanal 9 geführt wird.

Gemäß einer Weiterbildung der Erfindung kann sich zumindest einer der Fluidkanäle 8, 9 auch quer oder parallel oder leicht schief zu der Öffnung 4 erstrecken. Insbesondere kann zumindest einer der Fluidkanäle sich in einem flachen oder spitzen Winkel zu der Öffnung 4 erstrecken. Vorzugsweise ist zwischen den Fluidkanälen und der Öffnung 4 ein Winkel zwischen 45 und 135 Grad, vorzugsweise zwischen 80 und 100 Grad ausgebildet beispielsweise zwischen 85 und 95 Grad.

In dem Aufnahmeraum 6 ist ein Dichtringhalter 10 angeordnet. Der Dichtringhalter 10 weist eine Form auf, welche mit einer Form des Aufnahmeraums 6 korrespondiert.

In einem innenliegenden Aufnahmebereich 12 des Dichtringhalters 10 ist ein Ventilmittel 14 positioniert. Der Dichtringhalter 10 besteht hierbei aus zwei Teilen 16, 17, welche das Ventilmittel 14 umgreifen.

Das Ventilmittel 14 ist im Wesentlichen kugelförmig ausgestaltet und weist im Bereich der Öffnung 4 eine Wellenaufnahme 18 und an einer der Öffnung 4 gegenüberliegenden Seite eine Abflachung 20 auf. Durch die Abflachung 20 kann das Ventilmittel 14 auf einem Boden 7 des Aufnahmeraums 6 aufliegen und gegen ein Kippen oder Verdrehen gesichert werden. Alternativ kann diese Funktion durch zwei Dichtringe 22 übernommen werden.

Das Ventilmittel 14 weist einen Verbindungskanal 13 auf. Der Verbindungskanal 13 kann dazu eingesetzt werden, die Fluidkanäle 8, 9 miteinander fluidleitend zu verbinden. Vorzugsweise erstreckt sich der Verbindungskanal 13 senkrecht zu einer Öffnungsrichtung der Öffnung 4 durch das Ventilmittel 14 hindurch.

Gemäß einer Weiterbildung weist der Verbindungskanal 13 eine quere Erstreckung zu einer Öffnungsrichtung der Öffnung 4 durch das Ventilmittel 14 auf. Insbesondere ist der Winkel zwischen der Öffnungsrichtung der der Längserstreckung des Verbindungskanals zwischen 45 und 135 Grad, vorzugsweise zwischen 80 und 100 Grad ausgebildet.

Die Fluidkanäle 8, 9 verlaufen durch die Dichtringe 22 und durch das Ventilgehäuse 2 hindurch und münden unmittelbar am Ventilmittel 14.

Die Dichtringe 22 sind in Durchgangsöffnungen 11 des Dichtringhalters 10 eingebracht und bilden mit den Durchgangsöffnungen 11 Aufnahmenuten 24 für O-Ringe 26 aus.

In einem im Aufnahmeraum 6 angeordneten Zustand werden die O-Ringe 26 durch das Ventilmittel 14 und die Dichtringe 22 gegen Wandungen 28 des Aufnahmeraums 6 gepresst. Hierdurch kann eine axial in Richtung der Fluidströmung F wirkende Abdichtung ausgebildet werden.

Das Ventilmittel 14, die Dichtringe 22 und die O-Ringe 26 werden durch den Dichtringhalter 10 zusammengehalten und können somit in einem Schritt durch die Öffnung 4 in den Aufnahmeraum 6 des Ventilgehäuses 2 hineingeschoben werden.

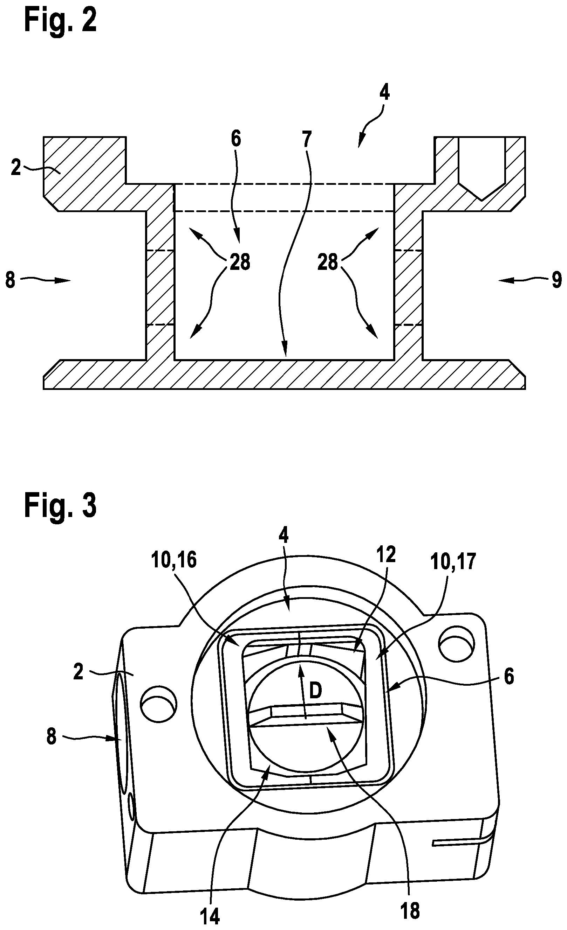

Die Figur 2 verdeutlicht in einer Schnittdarstellung den Aufbau des Ventilgehäuses 2 für ein Ventil aus Figur 1. Hierbei wird insbesondere der Aufnahmeraum 6 mit einem rechteckigen Querschnitt bzw. mit einer rechteckigen Grundfläche veranschaulicht. Die Öffnung 4 des Ventilgehäuses 2 weist Abmessungen auf, welche Abmessungen des Aufnahmeraums 6 und damit auch des Dichtringhalters 10 entsprechen oder diese überragen.

Der Aufnahmeraum 6 wird seitlich durch Wandungen 28 begrenzt. Diese Wandungen 28 dienen gleichzeitig als Dichtflächen für die O-Ringe 26.

In der Figur 3 ist eine perspektivische Darstellung auf eine Öffnung 4 des Ventils 1 aus der Figur 1 gezeigt. Es wird der quaderförmige Dichtringhalter 10 veranschaulicht, welcher in dem Aufnahmeraum 6 angeordnet ist. Der Dichtringhalter 10 ist formschlüssig im Aufnahmeraum 6 eingesetzt. In dem innenseitigen Aufnahmebereich 12 des Dichtringhalters 10 ist das Ventilmittel 14 positioniert. Das Ventilmittel 14 kann durch die Öffnung 4 des Ventilgehäuses 2 an der Wellenaufnahme 18 entlang einer Drehachse D rotiert werden, um eine Steuerung des Fluidstroms F zu erzielen.

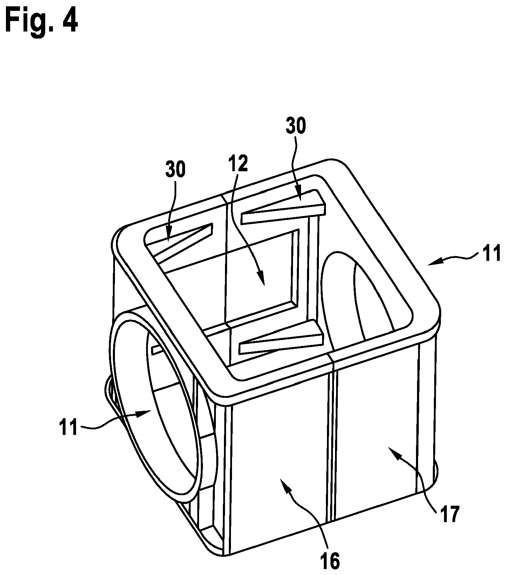

Die Figur 4 zeigt eine perspektivische Darstellung des Dichtringhalters 10 gemäß einer Ausführungsform. Der Dichtringhalter 10 ist zweiteilig ausgestaltet und besteht zwei gleich großen Teilen 16, 17, welche gemeinsam einen Aufnahmebereich 12 umgreifen.

Jedes Teil 16, 17 weist eine Durchgangsöffnung 11 auf, in welche ein Dichtring 22 und ein O-Ring 26 hineinlegbar ist. Die Durchgangsöffnungen 11 ermöglichen somit einen abgedichteten Übergang zwischen den Fluidkanälen 8, 9 und dem Verbindungskanal 13 des Ventilmittels 14.

Die Teile 16, 17 des Dichtringhalters 10 können durch ein Spritzgussverfahren hergestellt sein und Verstärkungsrippen 30 zum Erhöhen einer mechanischen Stabilität aufweisen.

Unter leicht schief ist zu verstehen, dass ein Winkel von insbesondere bis zu 20 Grad, vorzugsweise bis zu 5 Grad, beispielsweise bis zu 3 Grad ausgebildet ist. Vorzugsweise handelt es sich bei dem Winkel um die Abweichung gegenüber einer senkrechten Ausbildung. Insbesondere weist der Winkel bei einer leicht schiefen Ausbildung zwischen zumindest einem Fluidkanal 8, 9 und der Öffnung 4 insbesondere zwischen 70 und 110 Grad, vorzugsweise zwischen 85 und 95 Grad, beispielsweise zwischen 87 und 93 Grad auf.

## Patentansprüche

1. Ventil (1), insbesondere ein Expansionsventil, zur Steuern eines Fluidstroms (F), aufweisend ein Ventilgehäuse (2) mit einem Aufnahmeraum (6) und mindestens zwei mit dem Aufnahmeraum (6) verbundenen Fluidkanälen (8, 9), aufweisend eine Öffnung (4), welche vorzugsweise senkrecht zu den Fluidkanälen (8, 9) verläuft, und in dem Aufnahmeraum (6) mündet, wobei in dem Aufnahmeraum (6) ein Dichtringhalter (10) mit einem Ventilmittel (14) angeordnet ist, wobei der Dichtringhalter (10) mit aufgenommenen Ventilmittel (14) durch die Öffnung (4) in den Aufnahmeraum (6) hineinsetzbar ist und wobei das Ventilmittel (14) durch mindestens zwei Dichtringe (22) in dem Dichtringhalter (10) drehbar positioniert ist, **dadurch gekennzeichnet, dass** der Dichtringhalter (10) mindestens zwei Durchgangsöffnungen (11) zum Verbinden mit den Fluidkanälen (8, 9) aufweist, wobei in den Durchgangsöffnungen (11) jeweils ein Dichtring (22) und ein O-Ring (26) einsetzbar sind.

2. Ventil nach Anspruch 1, wobei jeweils ein O-Ring (26) an den mindestens zwei Dichtringen (22) angeordnet und durch den Dichtringhalter (10) in Position gehalten ist.

3. Ventil nach Anspruch 1 oder 2, wobei der Dichtringhalter (10) einteilig oder zweiteilig ausgestaltet ist.

4. Ventil nach Anspruch 3, wobei Teile (16, 17) des zweiteilig ausgeführten Dichtringhalters (10) durch eine Steckverbindung, eine Klebeverbindung, eine Schweißverbindung, oder durch eine formschlüssige Wechselwirkung der Teile mit Wandungen (28) des Aufnahmeraums (6) zum Positionieren des Ventilmittels (14) verbunden sind.

5. Ventil nach einem der Ansprüche 1 bis 4, wobei der Dichtringhalter (10) eine Quaderform aufweist und als ein Aufnahmekäfig für das Ventilmittel (14) ausgestaltet ist.

6. Ventil nach einem der Ansprüche 1 bis 5, wobei der Dichtringhalter (10) aus einem Kunststoff oder einem Metall besteht und durch ein Spritzgussverfahren, ein 3D-Druckverfahren oder ein Gussverfahren herstellbar ist.

7. Ventil nach Anspruch 1, wobei der Dichtring (22) und der O-Ring (26) formschlüssig, reibschlüssig oder kraftschlüssig in die Durchgangsöffnungen (11) des Dichtringhalters (10) einsetzbar sind.

8. Ventil nach einem der Ansprüche 1 bis 7, wobei über die Öffnung (4) des Ventilgehäuses (2) das Ventilmittel (14) verdrehsicher über eine Wellenaufnahme (18) mit einer Welle verbindbar ist.

9. Ventil nach Anspruch 8, wobei das Ventilmittel (14) an einer der Wellenaufnahme (18) entgegengesetzten Seite eine Abflachung (20) aufweist.

10. Dichtringhalter (10) zum Aufnehmen eines Ventilmittels (14), wobei der Dichtringhalter (10) für den Einsatz in einem Ventil (1) gemäß einem der vorhergehenden Ansprüche eingerichtet ist und wobei der Dichtringhalter (10) mindestens zwei Durchgangsöffnungen (11) zum Verbinden mit den Fluidkanälen (8, 9) des Ventils (1) aufweist, wobei in den Durchgangsöffnungen (11) jeweils ein Dichtring (22) und ein O-Ring (26) einsetzbar sind.

## Claims

1. Valve (1), in particular an expansion valve, for controlling a fluid flow (F), having a valve housing (2) with an accommodation space (6) and at least two fluid ducts (8, 9) connected to the accommodation space (6), having an opening (4) which preferably runs perpendicularly to the fluid ducts (8, 9) and opens into the accommodation space (6), wherein a sealing ring holder (10) with a valve means (14) is situated in the accommodation space (6), wherein the sealing ring holder (10) with the valve means (14) held therein can be inserted into the accommodation space (6) through the opening (4), and wherein the valve means (14) is positioned rotatably in the sealing ring holder (10) by means of at least two sealing rings (22), **characterized in that** the sealing ring holder (10) has at least two through-openings (11) for connecting to the fluid ducts (8, 9), wherein in each case a sealing ring (22) and an O-ring (26) are able to be inserted into the through-openings (11).

2. Valve according to Claim 1, wherein in each case an O-ring (26) is arranged on the at least two sealing rings (22) and is held in position by the sealing ring holder (10).

3. Valve according to Claim 1 or 2, wherein the sealing ring holder (10) is designed in one part or in two parts.

4. Valve according to Claim 3, wherein parts (16, 17) of the sealing ring holder (10) designed in two parts are connected by a plug connection, an adhesive connection, a welded connection, or by a positive interaction of the parts with walls (28) of the accommodation space (6) for positioning the valve means (14).

5. Valve according to one of Claims 1 to 4, wherein the sealing ring holder (10) has a cuboidal shape and is designed as a receiving cage for the valve means (14).

6. Valve according to one of Claims 1 to 5, wherein the sealing ring holder (10) consists of a plastic or a metal and is able to be produced by an injection-moulding method, a 3D-printing method or a casting method.

7. Valve according to Claim 1, wherein the sealing ring (22) and the O-ring (26) are able to be inserted by a positive connection, a frictional connection or a non-positive connection into the through-openings (11) of the sealing ring holder (10).

8. Valve according to one of Claims 1 to 7, wherein the valve means (14) is able to be connected in an anti-rotational manner via a shaft receiver (18) to a shaft via the opening (4) of the valve housing (2).

9. Valve according to Claim 8, wherein the valve means (14) has a flattened portion (20) on a side opposing the shaft receiver (18).

10. Sealing ring holder (10) for receiving a valve means (14), wherein the sealing ring holder (10) is designed for use in a valve (1) according to one of the preceding claims, and wherein the sealing ring holder (10) has at least two through-openings (11) for connecting to the fluid ducts (8, 9) of the valve (1), wherein in each case a sealing ring (22) and an O-ring (26) are able to be inserted into the through-openings (11).

## Revendications

1. Vanne (1), en particulier une vanne de détente, pour commander un écoulement de fluide (F), comprenant un corps de vanne (2) ayant une chambre de réception (6) et au moins deux canaux de fluide (8, 9) reliés à la chambre de réception (6), présentant une ouverture (4) qui s'étend de préférence perpendiculairement aux canaux de fluide (8, 9), et qui débouche dans la chambre de réception (6), un support (10) d'anneaux d'étanchéité, comprenant un organe de vanne (14), étant agencé dans la chambre de réception (6), le support (10) d'anneaux d'étanchéité avec organe de vanne (14) logé étant apte à être inséré à travers l'ouverture (4) dans la chambre de réception (6), et l'organe de vanne (14) étant positionné de manière rotative dans le support (10) d'anneaux d'étanchéité au moyen d'au moins deux anneaux d'étanchéité (22), **caractérisée en ce que** le support (10) d'anneaux d'étanchéité comprend au moins deux ouvertures de passage (11) pour la liaison avec les canaux de fluide (8, 9), un anneau d'étanchéité (22) et un joint torique (26) respectifs étant aptes à être insérés dans les ouvertures de passage (11).

2. Vanne selon la revendication 1, dans laquelle un joint torique (26) est agencé sur chacun desdits au moins deux anneaux d'étanchéité (22) et est maintenu en position par le support (10) d'anneaux d'étanchéité.

3. Vanne selon la revendication 1 ou la revendication 2, dans laquelle le support (10) d'anneaux d'étanchéité est conçu en une seule partie ou en deux parties.

4. Vanne selon la revendication 3, dans laquelle des parties (16, 17) du support (10) d'anneaux d'étanchéité réalisé en deux parties sont reliées par un assemblage à emboîtement, un assemblage collé, un assemblage soudé ou par une interaction par complémentarité de forme des parties avec des parois (28) de la chambre de réception (6) pour positionner l'organe de vanne (14).

5. Vanne selon l'une des revendications 1 à 4, dans laquelle le support (10) d'anneaux d'étanchéité présente une forme parallélépipédique et est conçu sous forme d'une cage de réception pour l'organe de vanne (14).

6. Vanne selon l'une des revendications 1 à 5, dans laquelle le support (10) d'anneaux d'étanchéité est constitué d'une matière plastique ou d'un métal et peut être fabriqué par un procédé de moulage par injection, un procédé d'impression 3D ou un procédé de moulage.

7. Vanne selon la revendication 1, dans laquelle l'anneau d'étanchéité (22) et le joint torique (26) sont aptes à être insérés par complémentarité de forme, par friction ou par adhérence dans les ouvertures de passage (11) du support (10) d'anneaux d'étanchéité.

8. Vanne selon l'une des revendications 1 à 7, dans laquelle 'organe de vanne (14) est apte à être relié à un arbre de manière solidaire en rotation par l'intermédiaire d'un logement d'arbre (18) via l'ouverture (4) du boîtier de vanne (2).

9. Vanne selon la revendication 8, dans laquelle l'organe de vanne (14) comprend un méplat (20) sur un côté opposé au logement d'arbre (18).

10. Support (10) d'anneaux d'étanchéité destiné à recevoir un organe de vanne (14), le support (10) d'anneaux d'étanchéité étant conçu pour être utilisé dans une vanne (1) selon l'une des revendications précédentes, et le support (10) d'anneaux d'étanchéité présentant au moins deux ouvertures de passage (11) destinées à être reliées aux canaux de fluide (8, 9) de la vanne (1), un anneau d'étanchéité (22) et un joint torique (26) étant aptes à être insérés dans chacune des ouvertures de passage (11).
